# EUROPÄISCHE PATENTSCHRIFT

(11) **EP 3 957 467 B1**
(45) Veröffentlichungstag und Bekanntmachung des Hinweises auf die Patenterteilung: **10.05.2023**
(21) Anmeldenummer: 20191326.6
(22) Anmeldetag: 17.08.2020
(51) Int. Cl.: B29C 64/223, B29C 64/106, B29C 64/118, B29C 64/245, B29C 64/236, B33Y 10/00, B33Y 30/00

(54) **FERTIGUNGSVORRICHTUNG ZUM SCHICHTWEISEN FERTIGEN VON OBJEKTEN**
MANUFACTURING DEVICE FOR THE LAYER-BY-LAYER MANUFACTURE OF OBJECTS
DISPOSITIF DE FABRICATION DESTINÉ À LA FABRICATION D'OBJETS PAR COUCHES

(43) Veröffentlichungstag der Anmeldung: 23.02.2022
(73) Patentinhaber: Technische Universität München, 80333 München (DE)
(72) Erfinder: ABSTREITER, Tobias, 84435 Lengdorf (DE); ZIEGLER, Philipp, 86647 Buttenwiesen (DE)
(74) Vertreter: Hoefer & Partner Patentanwälte mbB

(56) Entgegenhaltungen:
- US-A1- 2006 249 884
- US-A1- 2008 171 284
- US-A1- 2010 215 856
- US-A1- 2013 077 997
- US-A1- 2014 374 958
- US-A1- 2016 001 461

## Beschreibung

Die Erfindung betrifft eine Fertigungsvorrichtung. Die Fertigungsvorrichtung dient zum schichtweisen Fertigen von Objekten. Eine solche Fertigungsweise wird auch additive Fertigung oder 3D-Druck genannt.

Aus dem Stand der Technik sind Fertigungsvorrichtungen bekannt, die Material additiv auftragen, um eine gewünschte räumliche Geometrie zu erzeugen. Solche Vorrichtungen sind beispielsweise in der DE 10 2019 000 632 A1 oder der WO 2017/182928 A1 beschrieben. Insbesondere ist ein "Fused Filament Fabrication (FFF)" genanntes Verfahren bekannt, bei dem mittels eines Extruders Material ausgegeben wird, um ein gewünschtes Objekt schichtweise aufzubauen.

Nachteilig an herkömmlichen Fertigungsvorrichtungen, die auf dem FFF-Verfahren basieren, ist zumeist, dass eine Aufbaurate, zumindest im Vergleich zu anderen Herstellungsarten wie das Selektive Lasersintern (SLS), gering ist. Große Bauteile und/oder Baugruppen können daher nur mit erheblichem Zeitaufwand gefertigt werden. Weist das zu fertigende Objekt Überhänge auf, so müssen oftmals Stützstrukturen zusammen mit dem eigentlichen Objekt gefertigt werden, was wiederum die Fertigungszeit verlängert. In der Regel ist dann ein zusätzlicher Fertigungsschritt erforderlich, in dem die lediglich für den Fertigungsprozess benötigten Stützstrukturen wieder entfernt und/oder vom zu fertigenden Objekt gelöst/getrennt werden. Dabei können Ansatzpunkte der Stützstrukturen am fertigen Objekt verbleiben, so dass (in der Regel materialabtragende) Nachbearbeitungen des fertigen Objekts erforderlich sind.

Aus US 2008/0171284 A1, dem Oberbegriff der unabhängigen Ansprüche entsprechend, sind Festkörperbildgebungsvorrichtungen und -verfahren zur

Verwendung bekannt, welche durch Strahlen verfestigbare Materialien einsetzen.

Aus US 2013/0077997 A1 ist ein additives Fertigungssystem zum Drucken eines dreidimensionalen Teils unter Verwendung von Elektrophotographie bekannt.

Aus US 2006/249884 A1 sind eine Abbildungsvorrichtung und ein Verfahren unter Verwendung eines Baumaterialübertragungsmittels bekannt.

Aus US 2010/215856 A1 sind ein System und ein Verfahren bekannt, um dreidimensionale Objekte Schicht für Schicht herzustellen, indem selektiv Material von einem Druckkopf auf eine Übertragungsplattform verteilt und bestrahlt wird.

Aus US 2014/374958 A1 ist ein Herstellungsverfahren einer Struktur in dieser Reihenfolge bekannt: Bereitstellen einer Schicht, die aus einem Trägerelement und einer Modellierungsschicht besteht, indem eine Regulierungsfläche eines Regulierungselements mit der Modellierungsschicht in Kontakt gebracht wird, die auf einer Oberfläche eines Zwischenübertragungselements vorgesehen ist, Gießen eines Materials für das Stützelement, das zum Stützelement wird, um den Umfang der Modellierungsschicht zu füllen, während die Regulierungsfläche an der Modellierungsschicht anliegt, und Verfestigen des Materials für das Stützelement; Entfernen des Regulierungselements von der Schicht, die aus dem Trägerelement und der Modellierungsschicht besteht.

Es ist daher Aufgabe der Erfindung, eine Fertigungsvorrichtung bereitzustellen, die bei einfachem Aufbau eine zuverlässige, kostengünstige und zeitsparende, schichtweise Fertigung von Objekten ermöglicht. Außerdem ist es Aufgabe der Erfindung, ein entsprechendes Fertigungsverfahren anzugeben.

Die Lösung dieser Aufgaben erfolgt durch die Merkmale der unabhängigen Ansprüche. Die Unteransprüche haben bevorzugte Weiterbildungen der Erfindung zum Inhalt.

Somit erfolgt die Lösung der Aufgabe durch eine Fertigungsvorrichtung zum schichtweisen Fertigen von Objekten. Die Fertigungsvorrichtung weist zumindest eine Transferplattform und zumindest eine Druckeinheit auf. Insbesondere ist eine Anzahl von Transferplattformen und Druckeinheiten identisch. Mit anderen Worten ist vorzugsweise jeder Transferplattform exakt eine Druckeinheit zugeordnet. Die Druckeinheit ist ein Extruder und dient zum Aufbringen zumindest einer Schicht des Objekts auf eine Transferplattformoberfläche der Transferplattform. Die Schicht kann dabei insbesondere linienweise aufgebracht werden. Die Schicht erstreckt sich in eine erste Richtung und in eine zweite Richtung. Somit ist insbesondere vorgesehen, dass das System aus Druckeinheit und Transferplattform zumindest zwei Freiheitsgrade aufweist, die eine Relativbewegung von Transferplattform und Druckeinheit in die besagten zwei Richtungen zulassen. Besonders vorteilhaft ist somit ein herkömmliches, additives Fertigungsverfahren durchführbar, um die Schicht herzustellen.

Die Fertigungsvorrichtung weist weiterhin eine Bauplattform auf. Diese ist ausgebildet zum Übernehmen der Schicht von der Transferplattform, so dass das Objekt auf der Bauplattform in eine dritte Richtung schichtweise hergestellt wird. Zum Übergeben der Schicht von der Transferplattform an die Bauplattform wird die Transferplattform bevorzugt stärker erwärmt als die Bauplattform. Die Bauplattform ist bevorzugt entlang der dritten Richtung bewegbar, wobei ein Bewegen der Transferplattform und/oder der Druckeinheit in die dritte Richtung vorzugsweise nicht vorgesehen ist. Dadurch ist der Aufbau der Fertigungsvorrichtung vereinfacht.

Allerdings können die Transferplattform und/oder die Druckeinheit gemäß einer Ausführungsform in die dritte Richtung bewegbar sein. Dadurch können beispielsweise mehrere Schichten aufeinander auf der Transferplattform und somit ein aus diesen mehreren Schichten ausgebildetes Objektteil hergestellt werden. Hierbei ist der Freiheitsgrad in die dritte Richtung vorzugsweise relativ klein bzw. kurz, sodass insbesondere lediglich wenige Schichten, bevorzugt nicht mehr als zehn Schichten, besonders bevorzugt nicht mehr als fünf Schichten aufeinander (und damit nicht das Objekt, maximal lediglich ein Objektteil) auf der Transferplattform hergestellt werden können.

Unabhängig davon, ob ein Bewegen der Transferplattform und/oder der Druckeinheit in die dritte Richtung nicht vorgesehen ist oder ob ein Bewegen der Transferplattform und/oder der Druckeinheit in die dritte Richtung in einem - wie gerade eben beschrieben - vorzugsweise beschränkten Maße vorgesehen ist, erfolgt erfindungsgemäß kein Zusammensetzen des Objekts auf der Transferplattform im Sinne von herkömmlichen additiven Fertigungsverfahren, sondern werden jeweils neue Schichten auf der Transferplattform gefertigt und die fertigen Schichten werden in einem sich anschließenden Schritt auf der Bauplattform zu dem Objekt zusammengesetzt. Damit ist insbesondere ermöglicht, auf Stützstrukturen zu verzichten. Außerdem kann die Fertigung parallelisiert betrieben werden, indem mehrere Schichten gleichzeitig auf separaten Transferplattformen hergestellt werden. Dadurch lässt sich eine Fertigungsdauer für das Objekt erheblich verkürzen.

Des Weiteren ist die Möglichkeit einer gezielten Temperaturführung sowie Prozessführung gegeben. Beispielsweise kann eine Kristallisationstemperatur des zum Fertigen verwendeten Materials einfach und zuverlässig erreicht und gehalten werden. Damit kann auf einfache und zuverlässige Weise eine Festigkeit und/oder Anbindung zwischen den einzelnen Schichten optimiert werden.

Die Druckeinheit ist insbesondere zum Extrudieren eines thermoplastischen Materials ausgebildet. Die Druckeinheit arbeitet besonders vorteilhaft nach dem eingangs genannten FFF-Verfahren. In einer besonders vorteilhaften Variante kann die Druckeinheit unterschiedliche Materialien auf die Transferplattform aufbringen.

Bevorzugt ist vorgesehen, dass die Bauplattform eine Bauplattformoberfläche aufweist. Außerdem ist die Bauplattform ausgebildet, die Schicht von der Transferplattform auf der Bauplattformoberfläche oder auf bereits auf der Bauplattformoberfläche vorhandenen Objektteilen des Objekts zu übernehmen. Die Objektteile stellen insbesondere bereits übernommene und miteinander verbundene Schichten dar, die zuvor gefertigt wurden. Somit sind die Schritte des Herstellens der Schicht und des Verbindens der Schicht mit anderen Schichten zu einem Objektteil voneinander getrennt. Dies vereinfacht die Durchführung der jeweiligen Schritte, da diese stets auf die eigenen Anforderungen hin optimiert werden können, wobei Wechselwirkungen keine große Rolle mehr spielen und damit nahezu unberücksichtigt bleiben können.

Die Transferplattformoberfläche ist besonders vorteilhaft parallel zu der Bauplattformoberfläche ausgebildet. Dabei sind die Transferplattformoberfläche und die Bauplattformoberfläche insbesondere zum Zeitpunkt des Übergebens der auf der Transferplattform gefertigten Schicht an die Bauplattform im Wesentlichen parallel zueinander angeordnet. Somit ist eine einfache Übergabe der Schicht ermöglicht. Insbesondere lassen sich die beiden Oberflächen unmittelbar gegenüberliegend anordnen, so dass die zu übergebende Schicht sowohl Kontakt zur Transferplattformoberfläche als auch Kontakt zur Bauplattformoberfläche oder zu auf der Bauplattformoberfläche angeordneten Objektteilen aufweisen kann. Daher ist ein einfaches Übergeben der Schicht bei gleichzeitigem, zuverlässigem Verankern der Schicht an der Bauplattformoberfläche oder an den besagten Objektteilen ermöglicht.

Die Bauplattform ist besonders bevorzugt ausgebildet, zum Übernehmen der Schicht von der Transferplattform eine Presskraft auf die Schicht auszuüben. Somit lässt sich eine Festigkeit des Objekts in Schichtdickenrichtung, d.h. in die dritte Richtung, optimieren. Die einzelnen Schichten lassen sich dadurch fest und zuverlässig verbinden. Dies verringert ebenso eine Kerbwirkung zwischen den einzelnen Schichten.

Die Transferplattform weist bevorzugt ein Folienelement und eine das Folienelement aufnehmende Halteplatte auf. Das Folienelement bildet bevorzugt die Transferplattformoberfläche. Es ist außerdem bevorzugt vorgesehen, dass das Folienelement zum Lösen einer darauf aufgebrachten Schicht zumindest bereichsweise von der Halteplatte abhebbar ist. Dadurch lässt sich die Schicht von dem Folienelement abschälen, wodurch eine Belastung der Schicht beim Lösen von der Transferplattform minimiert ist. Dies minimiert das Risiko einer Beschädigung der Schicht und reduziert somit die Ausschussrate. Besonders vorteilhaft liegt das Folienelement während der Aufbringung der Schicht auf die Transferplattformoberfläche unmittelbar an der Halteplatte an, so dass die Transferplattformoberfläche wie eine Plattenoberfläche wirkt. Zum Ablösen der fertigen Schicht von der Transferplattformoberfläche hingegen lässt sich das Folienelement bereichsweise von der Halteplatte abheben, so dass ein Abschälen der Schicht von dem Folienelement, beispielsweise ausgehend von einem Rand der Schicht, erfolgt. Das Folienelement ist bevorzugt aus Polyimid gebildet.

Vorteilhafterweise weist die Transferplattform Oberflächenstrukturen zur Vergrößerung der Transferplattformoberfläche auf. Diese Oberflächenstrukturen können insbesondere Pyramiden, Stege oder ähnliche von der Oberfläche hervorragende Strukturen sein. Wird eine Schicht auf diese Oberflächenstrukturen aufgebracht, so zeichnen sich die Konturen der Oberflächenstrukturen auch auf der diesen abgewandten (gegenüberliegenden) Seite der Schicht ab. Die Schicht kann daher beim Übergeben an die Bauplattform besonders zuverlässig mit ebendieser oder mit auf der Bauplattform vorhandenen Objektteilen verbunden werden. Dadurch ist wiederum ein optimaler Halt zwischen den Schichten und damit eine verbesserte Integrität des Objekts, vor allem in Schichtdickenrichtung, erreicht.

Die Transferplattform und die Bauplattform sind besonders vorteilhaft jeweils derart ausgebildet, dass eine Haftfähigkeit der Schicht und/oder des Objekts an der Bauplattform höher ist als an der Transferplattform. Dies lässt sich bevorzugt durch eine jeweilige Oberflächenbeschaffenheit, durch eine jeweilige Beschichtung und/oder durch eine jeweilige Materialwahl für die jeweiligen Plattformen erreichen. Die Beschichtung kann beispielsweise Polytetrafluorethylen (PTFE) und/oder Perfluor(ethylen-propylen) (PFEP) sein. Auch kann durch unterschiedliche Temperaturführung der Plattformen eine unterschiedliche Haftfähigkeit erreicht werden. Durch die unterschiedlichen Haftfähigkeiten ist eine Übergabe der Schicht von der Transferplattform an die Bauplattform einfach und schnell möglich.

Besonders vorteilhaft ist eine Vielzahl von Transferplattformen vorgesehen. Bevorzugt ist außerdem jeder Transferplattform eine eigene Druckeinheit zugeordnet. Dies ermöglicht ein parallelisiertes Fertigen des Objekts, indem mehrere Schichten unabhängig voneinander gefertigt werden können. Die Bauplattform ist in diesem Fall eingerichtet, die Schichten in einer vorgebbaren Reihenfolge von den Transferplattformen zu übernehmen, um das Objekt herzustellen. Somit können insbesondere auch große und/oder komplexe Objekte schnell gefertigt werden. Auch ist bevorzugt vorgesehen, dass unterschiedliche Druckeinheiten vorhanden sind, so dass einzelne Transferplattformen mit verschiedenen Materialien bedruckbar sind. Dies bedeutet, dass Schichten aus unterschiedlichen Materialien auf die Transferplattformen aufgebracht werden können. So lassen sich mechanische Eigenschaften des herzustellenden Objekts, wie eine gezielte Masseverteilung oder eine definierte lokale Steifigkeit beeinflussen. Auch lassen sich hierüber definierte Fähigkeiten hinsichtlich Wärmeleitung oder elektrischer Leitfähigkeit einstellen. Ebenso können einfach und aufwandsarm sensorische oder aktorische Funktionen integriert werden.

Die Fertigungsvorrichtung weist bevorzugt eine Zerspanungseinheit auf, die zum zerspanenden Bearbeiten von auf die Bauplattform aufgebrachten Objektteilen vorgesehen ist. Bei der Zerspanungseinheit handelt es sich bevorzugt um eine Fräseinheit, Schleifeinheit oder Bohreinheit. Die Zerspanungseinheit ermöglicht ein Bearbeiten des Objekts in einem teilfertigen Zustand, sodass auch solche Stellen bearbeitet werden können, die am fertigen Objekt nur schwer oder gar nicht mehr erreichbar sind. Besonders vorteilhaft kann die Bearbeitung mittels der Zerspanungseinheit außerdem in Zeitspannen durchgeführt werden, in denen auf die Fertigstellung einer weiteren, zu übernehmenden Schicht auf der Transferplattform gewartet wird.

Durch die Möglichkeit, die Bauplattform zu verfahren, um Schichten von der Transferplattform bzw. von den Transferplattformen zu übernehmen, ist ebenso die Möglichkeit geschaffen, Zusatzkomponenten aufzunehmen. Somit kann insbesondere ein Versteifungselement in einen bereits gefertigten Objektteil eingefügt, beispielsweise eingepresst, werden. Durch nachfolgende Übernahmen weiterer Schichten kann das eingesetzte Versteifungselement verdeckt werden.

Vorteilhafterweise kann die Fertigungsvorrichtung auch eine Mehrzahl von Bauplattformen aufweisen. Auf diese Weise können beispielsweise zwei oder mehrere Objekte und/oder Objektteile parallel beziehungsweise gleichzeitig gefertigt werden. Hierbei kann insbesondere bei einer Multimaterialanordnung oder Hybridmaterialanordnung beispielsweise mit dem Aufbringen einer Schicht eines ersten Objektteils aus einem ersten Material auf einer ersten Bauplattform begonnen werden. Wenn daraufhin auf das erste Objektteil eine weitere Schicht aus einem weiteren Material aufgetragen werden soll, kann währenddessen auf ein zweites Objektteil auf einer zweiten Bauplattform parallel eine Schicht aus dem ersten Material aufgetragen werden. Dadurch können zwei oder mehrere Objekte bzw. Objektteile schnell und effizient gefertigt werden, insbesondere bei Multimaterialanordnungen oder Hybridmaterialanordnungen.

Die Erfindung betrifft außerdem ein Verfahren zum schichtweisen Fertigen von Objekten. Das Verfahren weist die folgenden Schritte auf: Zunächst erfolgt ein Aufbringen zumindest einer Schicht des Objekts auf eine Transferplattformoberfläche zumindest einer Transferplattform. Das Aufbringen erfolgt mittels einer Druckeinheit durch einen Extrusionsprozess. Es ist vorgesehen, dass sich die Schicht in eine erste Richtung und in eine zweite Richtung erstreckt. Insbesondere entspricht dieser Schritt einem herkömmlichen Fertigungsschritt der additiven Fertigung. Die Schicht kann hierbei vorzugsweise linienweise aufgebracht werden. Nachdem die Schicht auf der Transferplattformoberfläche fertiggestellt ist erfolgt ein Übergeben der Schicht von der Transferplattform an eine Bauplattform entlang einer dritten Richtung. Der schichtweise Aufbau des Objekts erfolgt somit durch Übergabe der Schichten von der Transferplattform an die Bauplattform. Die Schritte des Aufbringens und Übergebens werden wiederholt, so dass das Objekt in die dritte Richtung schichtweise hergestellt wird. Dadurch, dass die Schichten separat voneinander gefertigt und in einem weiteren Schritt kombiniert/zusammengefügt werden, können die Schritte des Aufbringens und Übergebens separat voneinander ausgelegt werden. Somit lassen sich diese Schritte jeweils optimal ausführen.

Das Übergeben der Schicht von der Transferplattform an die Bauplattform wiederum weist bevorzugt die folgenden Teilschritte auf: Zunächst erfolgt ein Annähern der Transferplattform und der Bauplattform. Insbesondere wird hierzu erreicht, dass die Schicht sowohl im Kontakt mit der Transferplattform als auch im Kontakt mit der Bauplattform, insbesondere mit bereits auf der Bauplattform vorhandenen Objektteilen, steht. Danach erfolgt ein Pressen der Schicht auf der Transferplattformoberfläche gegen eine Bauplattformoberfläche der Bauplattform oder gegen bereits auf der Bauplattformoberfläche vorhandene Objektteile des Objekts. Vorzugsweise wird die Presskraft von der Bauplattform auf die Schicht ausgeübt. Durch das Pressen wird eine Haftung der Schicht an der Bauplattformoberfläche und/oder an den besagten Objektteilen verbessert. Schließlich erfolgt ein Ablösen der Schicht von der Transferplattformoberfläche. Die Transferplattformoberfläche steht somit für ein Aufbringen einer weiteren Schicht zur Verfügung.

Besonders vorteilhaft entspricht die Temperatur der Schicht vor und/oder während des Pressens zumindest der Plastifizierungstemperatur des Materials der Schicht. Auf diese Weise ist ein optimaler Halt/ein optimales Verbinden zwischen den Schichten erreicht. Vorteilhafterweise entspricht hierbei die Temperatur der Schicht zumindest der Plastifizierungstemperatur bevorzugt kurz vor dem Pressen, insbesondere am Anfang des Pressens, wobei die Temperatur der Schicht, insbesondere durch den Kontakt mit der Bauplattform und/oder dem Objektteil, während des Pressens abnimmt.

Vorteilhafterweise erfolgt während und/oder nach dem Schritt des Ablösens ein Kühlen der Transferplattformoberfläche und/oder der Bauplattformoberfläche. Somit kann ein Ablösen des Materials von der Transferplattform vereinfacht und leichter weitere Schichten auf die Transferplattformoberfläche aufgebracht werden.

Im Schritt des Aufbringens wird in einer bevorzugten Ausgestaltung genau eine Schicht auf der Transferplattformoberfläche gefertigt. Somit wird jede Schicht einzeln gefertigt und an die Bauplattform übergeben. Damit sind alle Schichten optimal miteinander verbunden, da das Verbinden einzelner Schichten zu dem fertigen Objekt ausschließlich durch die Übergabe derselben von der Transferplattform an die Bauplattform erfolgt. Ein unmittelbares Fertigen einer Schicht auf einer bereits vorhandenen Schicht ist somit vermieden.

Zum Übergeben der Schicht von der Transferplattform an die Bauplattform, insbesondere zum Annähern der Transferplattform und der Bauplattform, wird bevorzugt die Bauplattform entlang der ersten Richtung und der zweiten Richtung und der dritten Richtung bewegt. Die Transferplattform verbleibt vorteilhafterweise an einer vordefinierten Position. Insbesondere eine Bewegung der Transferplattform entlang der dritten Richtung ist nicht vorgesehen. Die Transferplattform kann entweder stationär oder entlang der ersten Richtung oder entlang der ersten und der zweiten Richtung bewegt werden, wobei eine Bewegung insbesondere nur zum Aufbringen der Schicht durchgeführt wird. Die Schicht kann besonders vorteilhaft derart aufgebracht werden, dass die Transferplattform entlang der ersten Richtung und die Druckeinheit entlang der zweiten Richtung oder umgekehrt bewegt werden. In jedem Fall ist bevorzugt vorgesehen, dass die Transferplattform während der Übergabe unbeweglich an der vordefinierten Position verbleibt.

Vorteilhafterweise können in einem Fall, in welchem eine Mehrzahl von Transferplattformen vorgesehen ist, alle Transferplattformen zum Übergeben der jeweiligen Schichten an der gleichen vordefinierten Position, insbesondere in der zweiten Richtung, verbleiben.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine schematische Abbildung einer Fertigungsvorrichtung gemäß einem Ausführungsbeispiel der Erfindung,
Fig. 2 eine schematische Detailansicht der Fertigungsvorrichtung gemäß einem Ausführungsbeispiel der Erfindung,
Fig. 3 eine schematische Detailansicht einer alternativen Ausgestaltung der Fertigungsvorrichtung gemäß einem Ausführungsbeispiel der Erfindung,
Fig. 4 ein schematisches Ablaufdiagramm eines Verfahrens gemäß einem Ausführungsbeispiel der Erfindung,
Fig. 5 eine schematische Detailansicht einer alternativen Ausgestaltung der Fertigungsvorrichtung gemäß einem Ausführungsbeispiel der Erfindung,
Fig. 6 eine schematische Detailansicht einer alternativen Ausgestaltung der Fertigungsvorrichtung gemäß einem Ausführungsbeispiel der Erfindung,
Fig. 7 und 8 schematische Detailansichten einer alternativen Ausgestaltung der Fertigungsvorrichtung gemäß einem Ausführungsbeispiel der Erfindung,
Fig. 9 eine schematische Detailansicht einer alternativen Ausgestaltung der Fertigungsvorrichtung gemäß einem Ausführungsbeispiel der Erfindung, und
Fig. 10 eine schematische Detailansicht einer alternativen Ausgestaltung der Fertigungsvorrichtung gemäß einem Ausführungsbeispiel der Erfindung.

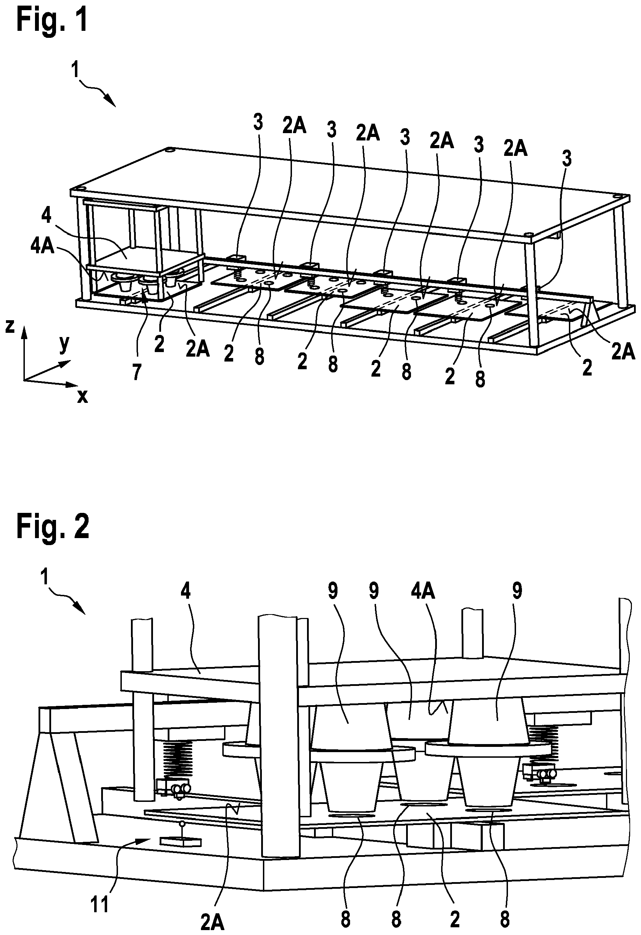

Figur 1 zeigt schematisch eine Fertigungsvorrichtung 1 zum schichtweisen Fertigen eines Objekts 7. In dem gezeigten Ausführungsbeispiel werden vier gleichartige Objekte 7 gleichzeitig gefertigt. Dazu sind eine Bauplattform 4 mit einer Bauplattformoberfläche 4A und sechs Transferplattformen 2 mit jeweils einer Transferplattformoberfläche 2A vorhanden. Jeder Transferplattform 2 ist eine Druckeinheit 3 zugeordnet. Somit lassen sich mehrere Schichten 8 der Objekte 7 im Wesentlichen gleichzeitig (parallel) fertigen. "Im Wesentlichen gleichzeitig (parallel) fertigen" meint, dass sich das Fertigen der mehreren Schichten 8 unter Verwendung der Transferplattformen 2 und der diesen zugeordneten Druckeinheiten 3 zeitlich zumindest teilweise überlappt, vorzugsweise zeitlich größtenteils bis vollständig überlappt. Damit ist eine Parallelisierung in der Fertigung erreicht. Sobald die einzelnen Schichten 8 fertiggestellt sind, werden diese Schichten 8 an die Bauplattform 4 übergeben.

Auf der Bauplattformoberfläche 4A werden somit die Schichten 8 zu den Objekten 7 schichtweise zusammengesetzt.

Bei den Druckeinheiten 3 handelt es sich um Extruder. Die Extruder können gleiches Material ausgeben oder es können unterschiedliche Materialen vorgesehen sein, so dass auf verschiedenen Transferplattformen 2 unterschiedliche Materialien aufbringbar sind. Besonders vorteilhaft arbeiten die Druckeinheiten 3 nach dem FFF-Verfahren.

Gemäß dem hier gezeigten Ausführungsbeispiel weisen die Transferplattformen 2 eine Beweglichkeit in y-Richtung auf. Eine Bewegung in eine andere Raumrichtung ist hierbei bevorzugt nicht vorgesehen. Gemäß dem hier gezeigten Ausführungsbeispiel weisen die Druckeinheiten 3 eine Beweglichkeit in x-Richtung auf. Somit lässt sich jeweils eine Kontur/Schicht 8 auf den Transferplattformoberflächen 2A in der xy-Ebene erzeugen (die Schichtdicke in z-Richtung sei hierbei vernachlässigt). Damit können beliebig ausgestaltete Schichten 8 auf den Transferplattformoberflächen 2A erzeugt werden. In einigen Anwendungsfällen kann eine Schicht 8 eine Ausnehmung aufweisen. Weisen mehrere Schichten 8 eine entsprechende Ausnehmung aus, so lässt sich durch das serielle Übertragen dieser Schichten 8 an die Bauplattform 4 eine Kavität innerhalb des zu fertigenden Objekts 7 ausbilden.

Ist das Aufbringen einer Schicht 8 beendet, so verbleibt die Transferplattform 2 in einer Referenzposition, also in einer vordefinierten Position zur Übertragung der Schicht 8 an die Bauplattform 4. Hierbei können insbesondere alle Transferplattformen 2 nach dem jeweiligen Aufbringen einer Schicht 8 in der gleichen Referenzposition in y-Richtung verbleiben. Gemäß dem hier gezeigten Ausführungsbeispiel weist die Bauplattform 4 bevorzugt eine Beweglichkeit in alle drei Raumrichtungen, d.h. in die x-Richtung, in die y-Richtung und in die z-Richtung auf. Damit ist auch gemeint, dass die Bauplattform 4 entgegengerichtet zu den jeweiligen Raumrichtungen bewegbar ist, also in -x-Richtung, in -y-Richtung und in -z-Richtung. Somit kann die Bauplattform 4 oberhalb der Transferplattform 2 platziert werden, um anschließend eine Presskraft in z-Richtung auf die Transferplattform 2 aufzubringen. Gleichzeitig wird die Transferplattform 2 stärker aufgeheizt als die Bauplattform 4. Somit erfolgt eine Übernahme der Schicht 8 von der Transferplattform 2. Die Schicht 8 wird somit entweder auf die Bauplattformoberfläche 4A selbst oder auf bereits auf der Bauplattformoberfläche 4A vorhandene Objektteile 9 aufgebracht. Die Objektteile 9 sind dabei zuvor gefertigte Schichten, die bereits an die Bauplattform übergeben und in z-Richtung miteinander verbunden wurden. Dies ist in der Detailansicht in Figur 2 genauer dargestellt.

Aufgrund der Möglichkeit der Verpressung der einzeln hergestellten Schichten 8 wird eine optimale Festigkeit der Objekte 7 in Schichtdickenrichtung, d.h. in z-Richtung, erreicht. Insbesondere sind außerdem Kerbwirkungen vermieden oder reduziert. Somit ist neben einer schnelleren Fertigung aufgrund von Parallelisierung außerdem erreicht, dass die Fertigungsgüte erhöht ist.

Die Fertigungsvorrichtung 1 weist vorzugsweise eine Zerspanungseinheit 11 auf, in dem gezeigten Ausführungsbeispiel in Form eines Fräswerkzeugs. Die Zerspanungseinheit 11 ermöglicht ein zerspanendes Bearbeiten der Objektteile 9, vor allem bevor die Objekte 7 fertiggestellt sind. Somit lassen sich insbesondere solche Bereiche bearbeiten, die nach Fertigstellung des jeweiligen Objekts 7 nur noch schwerlich oder gar nicht erreichbar sind. Zum zerspanenden Bearbeiten ist die Bauplattform 4 zu der Zerspanungseinheit 11 zu bewegen, wobei die Zerspanungseinheit 11 bevorzugt stationär angeordnet ist. Alternativ oder zusätzlich dazu kann die Zerspanungseinheit 11 bewegbar gelagert sein kann.

Um das Fertigen der Objekte 7 effizient auszugestalten, ist eine Haftfähigkeit der Schicht 8 an den Transferplattformen 2 geringer als an der Bauplattformoberfläche 4A bzw. an den bereits auf der Bauplattformoberfläche 4A vorhandenen Objektteilen 9. Dies wird insbesondre durch eine passende Materialauswahl der Transferplattformen 2 und der Bauplattformoberfläche 4A oder durch entsprechende Beschichtungen erreicht. Auch kann die jeweilige Oberflächenbeschaffenheit unterschiedlich sein. Besonders vorteilhaft weisen die Transferplattformen 2 Oberflächenstrukturen zur Erhöhung der Transferplattformoberflächen 2A auf. Diese Oberflächenstrukturen können beispielsweise feine Stege oder Pyramiden sein, wobei sich die Oberflächenstrukturen an der diesen abgewandten Seite der Schicht 8 abzeichnen. Dadurch wird die Schicht 8 bei Übergabe an die Bauplattform 4 mit entsprechend vergrößerter Oberfläche auf die unmittelbar zuvor an die Bauplattform 4 übergebene Schicht 8 aufgebracht, wodurch die Haftfähigkeit der Schichten 8 untereinander, d.h. der neu gefertigten Schichten 8 mit den bereits vorhandenen Objektteilen 9, erhöht ist.

Im Moment der Übergabe der gefertigten Schicht 8 kann außerdem ein passendes Temperaturmanagement erfolgen. So kann durch entsprechende Aufheizung der Transferplattformen 2 und/oder der Bauplattformen 4 ein für die Übergabe optimaler, materialabhängiger Temperaturgradient eingestellt werden. Ebenso kann durch zusätzliche Einleitung von Wärmeenergie, beispielweise mittels Ultraschall und/oder Wärmestrahlung (beispielsweise Infrarotstrahlung), eine gezielte Temperaturführung erreicht werden. Ebenso kann eine Abkühlung, beispielsweise mittels Pressluft, gezielt erfolgen, um eine optimale Übergabe der Schicht 8 zu erreichen. Besonders vorteilhaft entspricht die Temperatur der Schicht 8 während der Übergabe zumindest der Plastifizierungstemperatur des Materials der Schicht 8.

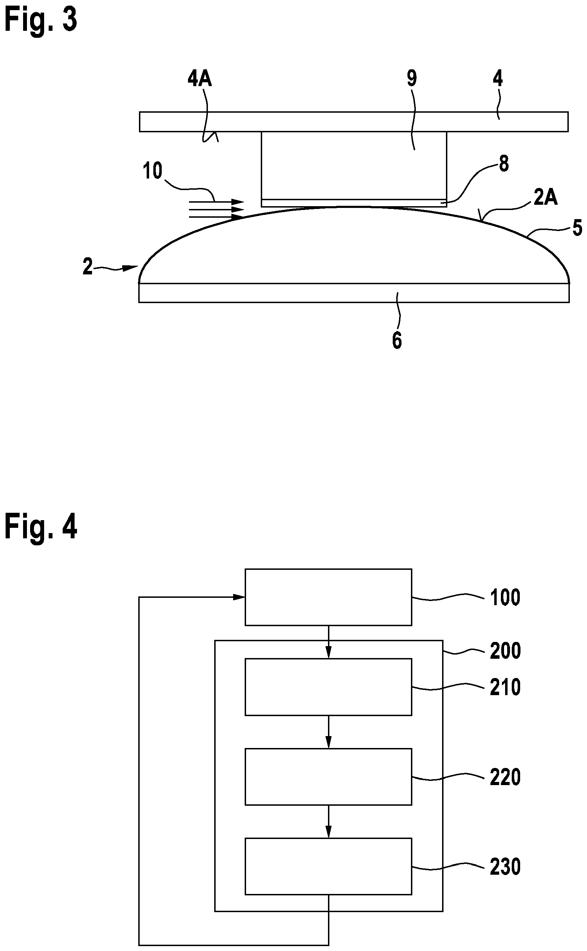

Figur 3 zeigt hierzu eine alternative Ausgestaltung der Fertigungsvorrichtung 1. Hierbei ist jede Transferplattform 2 durch eine Halteplatte 6 und ein Folienelement 5 gebildet. Das Folienelement 5 wiederum bildet die Transferplattformoberfläche 2A. Somit wird die Schicht 8 mittels der Druckeinheit 3 auf das Folienelement 5 aufgebracht (und steht damit nicht in direktem Kontakt mit der Halteplatte 6). Das Folienelement 5 liegt dabei an der Halteplatte 6 an, so dass die Transferplattformoberfläche 2A wie eine Plattenoberfläche wirkt (in Fig. 3 nicht gezeigt). Die Halteplatte 6 kann beheizbar sein. Um ein enges Anliegen des Folienelements 5 an der Halteplatte 6 zu ermöglichen, ist bevorzugt eine nicht gezeigte Spannvorrichtung für das Folienelement 5 vorgesehen. Zusätzlich oder alternativ ist auch vorstellbar, dass der von Folienelement 6 und Halteplatte 5 umschlossene Raum mit einem Unterdruck beaufschlagbar ist, um ein enges Anliegen des Folienelements 5 an der Halteplatte 6 zu ermöglichen. Das Folienelement 5 kann elastisch ausgebildet sein.

Nachdem die Schicht 8 auf das Folienelement 5 aufgebracht wurde, erfolgt die Übergabe der Schicht 8 an die Bauplattform 4, in Figur 3 beispielsweise an ein bereits gefertigtes Objektteil 9. Zum Ablösen der Schicht 8 von dem Folienelement 5 wird das Folienelement 5 bereichsweise von der Halteplatte 6 abgehoben, so dass ein Abschälen der Schicht 8 von deren Rändern her erfolgt. Dieses Abheben des Folienelements 5 lässt sich beispielsweise über eine regelbare Zufuhr eines fluiden Arbeitsmediums in den von Folienelement 6 und Halteplatte 5 umschlossenen Raum bewerkstelligen. Der Vorgang des Ablösens kann durch Anströmen von Pressluft 10 an einen der besagten Ränder der Schicht 8 unterstützt werden, wobei die Pressluft 10 zusätzlich eine Kühlwirkung vermittelt.

Durch die Verwendung des Folienelements 5 kann somit eine einfache und zuverlässige Übergabe der Schicht 8 erfolgen, wobei eine Beschädigung der Schicht 8 oder des Objektteils 9 vermieden ist. Das Folienelement 5 ist bevorzugt aus Polyimid gebildet.

Figur 4 zeigt schließlich schematisch den Ablaufplan eines Fertigungsverfahrens, das bevorzugt mit der zuvor beschriebenen Fertigungsvorrichtung 1 durchführbar ist. Das Verfahren unterteilt sich zunächst in zwei Schritte, wobei in einem ersten Schritt ein Aufbringen 100 einer Schicht 8 auf die Transferplattform 2 erfolgt und in einem zweiten Schritt ein Übergeben 200 der Schicht 8 an die Bauplattform 4.

Der Schritt des Aufbringens 100 lässt sich bevorzugt parallelisiert durchführen, d.h. dieser Schritt wird mehrfach und im Wesentlichen zeitgleich auf verschiedenen Transferplattformen 2 durchgeführt. Der Schritt des Übergebens 200 weist mehrere Teilschritte auf:
Zunächst erfolgt ein Annähern 210 von Transferplattform 2 und Bauplattform 4. Dabei bleibt die Transferplattform 2 bevorzugt unbeweglich, während die Bauplattform 4 entlang der x-Richtung, y-Richtung und z-Richtung bewegt wird. Anschließend erfolgt ein Anpressen 220 der Bauplattform 4 auf die Transferplattform 2 in z-Richtung. Somit erfolgt ein enges Anliegen und optimales Haften der Schicht 8 an dem Objektteil 9, wie zuvor beschrieben.

Zuletzt erfolgt ein Ablösen 230 der Schicht 8 von der Transferplattform 2. Die Transferplattform 2 steht dann wieder für die Aufnahme einer weiteren Schicht 8 bereit, so dass der Schritt des Aufbringens 100 erneut durchgeführt werden kann. Sind mehrere Transferplattformen 2 vorhanden, so werden die Schichten 8 in einer vorgebbaren Reihenfolge an die Bauplattform 4 übergeben.

Bei dem Schritt des Übergebens 200 können die Bauplattform 4 und die Transferplattform 2 relativ zueinander zentriert, insbesondere vollständig überlappend, angeordnet werden, wobei eine Positionierung der Schichten 8 an dem Objektteil 9 beim Schritt des Aufbringens 100 vorbestimmt wird. Alternativ oder zusätzlich dazu können die Schichten 8 beim Aufbringen 100 zentriert auf der Transferplattform 2 hergestellt werden, wobei die Positionierung der Schichten 8 an dem Objektteil 9 durch eine relative Ausrichtung der Bauplattform 4 und der Transferplattform 2 erfolgt.

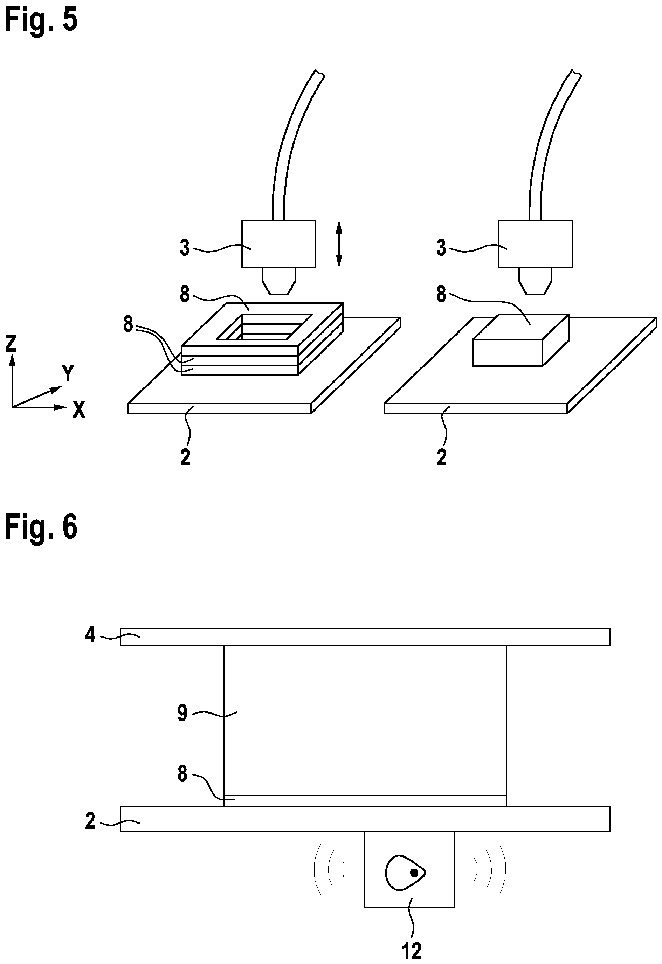

Figur 5 zeigt eine schematische Detailansicht einer alternativen Ausgestaltung der Fertigungsvorrichtung 1 gemäß einem Ausführungsbeispiel der Erfindung. Figur 5 zeigt insbesondere eine schematische Darstellung von zwei Transferplattformen 2 der Fertigungsvorrichtung 1.

Hierbei werden auf einer ersten Transferplattform 2 (links) beispielsweise drei erste Schichten 8 aufeinander hergestellt, während auf der zweiten Transferplattform 2 (rechts) eine zweite Schicht 8 hergestellt wird, deren Schichtdicke/Höhe in z-Richtung im Wesentlichen der Gesamthöhe (in z-Richtung) der drei ersten Schichten entspricht. Hierfür ist die Druckeinheit 3 entlang der z-Richtung bewegbar. Alternativ oder zusätzlich dazu kann auch die Transferplattform 2 entlang der z-Richtung bewegbar sein.

Auf diese Weise können eine oder mehrere Ebenen der Objektteile 9 nach dem Übergeben der Schichten 8 an die Bauplattform 4 auch jeweils aus einer Kombination von einzelnen oder mehreren Schichten 8 mehrerer Transferplattformen 2 gebildet werden.

Eine Höhe beziehungsweise eine Gesamthöhe dieser verschiedenen Schichten 8 muss nicht gleich sein. Stattdessen können diese auch gezielt in oder mit unterschiedlichen Höhen ausgebildet sein, wodurch sich insbesondere die Festigkeit des Objekts 7 in z-Richtung an gegebenenfalls vorbestimmten Stellen erhöhen lässt.

Wie vorstehend erläutert können auch hierbei unterschiedliche Materialien der Schichten 8 kombiniert werden, um eine Multimaterialanordnung innerhalb einer Ebene, welche aus verschiedenen Schichten 8 mehrerer Transferplattformen 2 gebildet wird, des fertigen Objekts 7 zu erreichen. Konkret können hierbei vorteilhafterweise die drei ersten Schichten 8 aus unterschiedlichen Materialien und die zweite Schicht 8 aus einem einzigen Material gebildet werden.

Zur Verstellung beziehungsweise Bewegung der Druckeinheit 3 und/oder der Transferplattform 2 kann die Fertigungsvorrichtung 1 ein Festkörpergelenk und/oder einen Kurzhubzylinder und/oder einen Motor, insbesondere einen Modellbauservomotor, aufweisen. Diese können die Druckeinheit 3 und/oder die Transferplattform 2 besonders bevorzugt zwischen vorbestimmt positionierten Endanschlägen bewegen und positionieren.

Figur 6 zeigt eine schematische Detailansicht einer alternativen Ausgestaltung der Fertigungsvorrichtung 1 gemäß einem Ausführungsbeispiel der Erfindung.

Hierbei weist die Fertigungsvorrichtung 1 einen Schwingungs-Generator 12 auf. Der Schwingungs-Generator 12 kann eine Ultraschallsonde, einen Schallwellen-Generator und/oder einen mechanischen Schwingungs-Generator wie etwa eine Exzenter-Unwucht umfassen.

Mittels des Schwingungs-Generators 12 können Schwingungen in die Fertigungsvorrichtung 1 (hier insbesondere in die Transferplattform 2) eingebracht werden, um während der Übertragung der Schichten 8 von der Transferplattform 2 an die Bauplattform 4 die Schichtfestigkeiten durch eine gezielte Einbringung von Energie, insbesondere von Wärmeenergie und/oder kinetischer Energie, an den Kontaktflächen zu erhöhen. Hierbei kann kinetische Energie das Verbinden von Polymerketten in oder zwischen den Schichten 8 unterstützen.

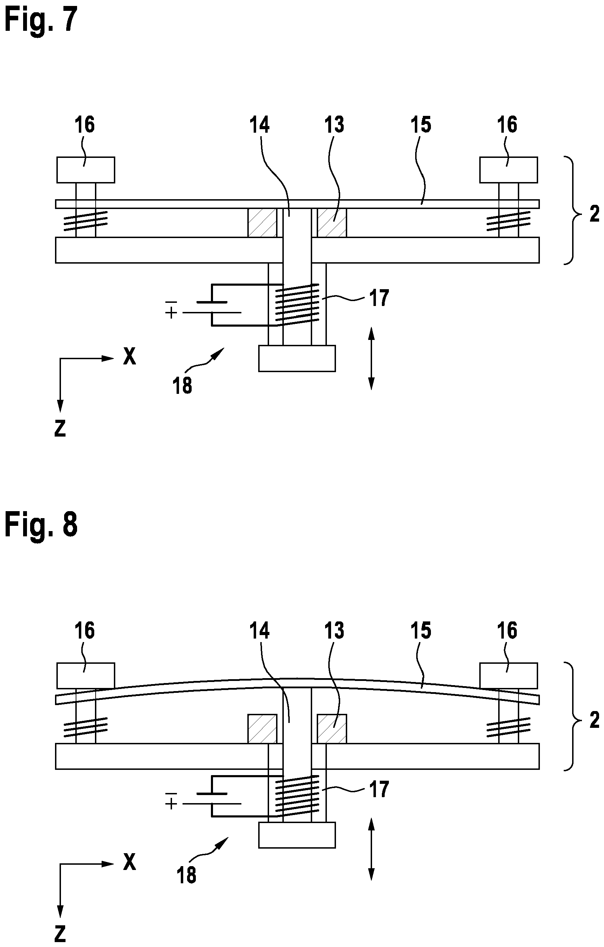

Figuren 7 und 8 zeigen schematische Detailansichten einer alternativen Ausgestaltung der Fertigungsvorrichtung 1 gemäß einem Ausführungsbeispiel der Erfindung. Figuren 7 und 8 zeigen insbesondere eine bevorzugte Ausgestaltung der Transferplattform 2 der Fertigungsvorrichtung 1. Dabei zeigt Figur 7 einen Grundzustand der Transferplattform 2 und Figur 8 einen gewölbten Zustand der Transferplattform 2, wie nachstehend erläutert wird.

Hierbei weist die Transferplattform 2 eine Transferplatte 15 auf, wobei die Schichten 8 auf die Transferplatte 15 aufgebracht werden. Die Transferplattform 2 weist außerdem ein aktives Stellglied 17 auf, welches die Transferplatte 15 gezielt wölben kann. Die Transferplattform 2 weist außerdem Abstandshalter 13 auf, welche eine Höhe der Transferplatte 15 beim Pressen optimieren.

Ein solcher Abstandshalter 13 kann insbesondere aus einem harten oder elastischen Material gebildet sein.

Darüber hinaus weist die Transferplattform 2 Stellschrauben 16 auf, welche als Gegenlagerung bei der Wölbung dienen. Je nach Anordnung der Stellschrauben 16 wird die Transferplatte 15 in x-Richtung und y-Richtung gleichmäßig oder annähernd gleichmäßig gewölbt. Werden die Stellschrauben 16 anders angeordnet und/oder wird die Transferplatte 15 an zwei sich gegenüberliegenden Seiten beispielsweise durch eine Strebe (nicht dargestellt) versteift, so lässt sich die Transferplatte 15 gezielt zumindest überwiegend in nur eine Richtung verbiegen. Mittels der Stellschrauben 16 kann außerdem die Parallelität der Transferplatte 15 zur Ebene der Druckeinheit 3 eingestellt werden. Die Stellschrauben 16 können insbesondere elektrisch angetrieben werden.

Das Stellglied 17 wird bevorzugt, wie in den Figuren 7 und 8 dargestellt, durch einen Elektromagneten 18 bewegt. Alternativ kann das Stellglied 17 auch ein Pneumatikzylinder sein. Das Stellglied 17 ist mit einem Stößel 14 verbunden, welcher Kräfte, die von dem Elektromagneten 18 erzeugt werden, auf die Transferplatte 15 überträgt.

Die Transferplatte 15 ist bevorzugt als CFK-Platte (kohlenstofffaserverstärkter Kunststoff) oder GFK-Platte (glasfaserverstärkter Kunststoff) ausgeführt.

Eine solche aktive Wölbung der Transferplatte 15 kann bei der Übertragung der Schicht 8 von der Transferplattform 2 an die Bauplattform 4 angewendet werden. Dies kann insbesondere in dem Moment erfolgen, in welchem der eigentliche Pressvorgang begonnen wird. Dadurch kann eine Kraftübertragung über eine gewisse Wegstrecke, welche durch einen Wölbungsradius definiert wird, erfolgen. Auf diese Weise lassen sich die Flächenkräfte beziehungsweise der wirksame Druck erhöhen, ohne dabei die Gesamtkraft wesentlich erhöhen zu müssen, da zuerst nur Bereiche in der Nähe eines Wölbungsmittelpunkts anliegen.

Weiter vorteilhaft ist es, dass eventuell vorhandene Luft beziehungsweise Schutzgase vor allem im Bereich des Wölbungsmittelpunkts, insbesondere bei relativ großflächigen Gebilden beziehungsweise Schichten 8, besser nach außen entweichen kann.

Vorzugsweise kann der Elektromagnet 18 pulsiert geschalten werden, wodurch dynamische Schwingungen durch pulsierende Wölbungen in der Transferplatte 15 erzeugt werden können.

Außerdem können die Schichten 8 durch die Wölbung leichter von der Transferplatte 15, insbesondere nach dem vorgenannten Abkühlen, abgelöst und an die Bauplattform 4 übertragen werden. Insbesondere können dadurch Zugkräfte verringert werden, welche beim Ablösen der Schichten 8 auf die Schichten 8 wirken.

Diese vorteilhafte Ausgestaltung kann insbesondere mit dem vorstehend erläuterten Folienelement 5 kombiniert werden.

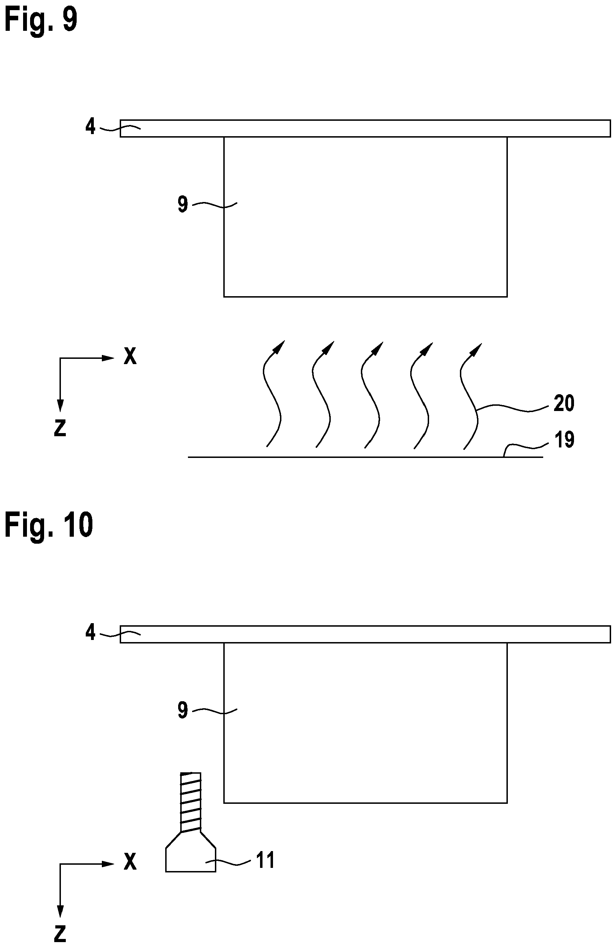

Figur 9 zeigt eine schematische Detailansicht einer alternativen Ausgestaltung der Fertigungsvorrichtung 1 gemäß einem Ausführungsbeispiel der Erfindung. Die Fertigungsvorrichtung 1 weist hierbei eine Wärmequelle 19, vorzugsweise einen Wärmestrahler 19, besonders bevorzugt eine Infrarotlichtquelle 19 auf, welche Objektteile 9 mit Wärme/Wärmestrahlung 20 beaufschlagt. Die Wärmequelle 19 kann somit insbesondere die zuletzt an die Bauplattform 4 übertragenen Schichten der Objektteile 9 temporär und schnell erwärmen, sodass mehr Wärmeenergie für die Bindung der Schicht 8 an das Objektteil 9 bei der Übertragung zur Verfügung steht.

Alternativ oder zusätzlich zum Wärmestrahler 19 können die Schichten 8 auch mittels eines elektrischen Feldes, welches von einem Generator (nicht dargestellt) erzeugt wird, induktiv erwärmt werden.

Figur 10 zeigt eine schematische Detailansicht einer alternativen Ausgestaltung der Fertigungsvorrichtung 1 gemäß einem Ausführungsbeispiel der Erfindung. Hierbei ist insbesondere eine Detailansicht der Zerspanungseinheit 11 dargestellt.

Die Zerspanungseinheit 11 ist, wie vorstehend erläutert, insbesondere als Fräswerkzeug 11 ausgebildet. Die Zerspanungseinheit 11 kann das Objektteil 9 nach jedem Übertragen einer Schicht 8 und/oder nach der Übertragung von mehreren Schichten 8 zerspanen, um eine höhere Maßhaltigkeit und eine bessere Oberflächengüte zu erzielen. Auch eine untere Planfläche der Objektteile 9 kann hierdurch zerspant werden, sodass eine optimale Planität der Objektteile 9 beziehungsweise des fertigen Objekts 7 erzielt werden kann.

Dies verhindert insbesondere, dass Planitätsfehler der übertragenen Schichten 8 entstehen, welche sich ansonsten in den Objektteilen 9 aufsummieren beziehungsweise sich fortpflanzen können. Hierdurch kann die Qualität des Objekts 7 gesteigert werden.

Des Weiteren kann die Fertigungsvorrichtung 1 hierbei ein System zur Überwachung der Planität aufweisen. Hierfür kann die Fertigungsvorrichtung 1 einen Taster oder ein berührungsloses System wie etwa ein Laser-Messsystem oder anderweitige optische Systeme aufweisen.

Anhand solcher Messungen, welche auch die gesamte Bauhöhe des Objektteils 9 überwachen können, ist außerdem vorteilhafterweise eine aktive Regelung der verwendeten Materialmengen im Druckprozess auf den Transferplattformen 2 möglich. Des Weiteren ist eine Regelung der Ausrichtung der Transferplattformen 2 über die Stellschrauben 16, welche insbesondere elektrisch angetrieben werden, möglich, sodass die Schichthöhe gezielt lokal geringfügig variiert werden kann, wodurch auf einen möglichen Verzug reagiert und somit das Bauteil weiterhin planar aufgebaut werden kann. Diese Regelung kann anhand der erfassten Planität und/oder Höhe des Objektteils 9 den Materialfluss, insbesondere die Menge des Materials, welches die Druckeinheiten 3 auf die Transferplattformen 2 übertragen, regeln.

Hierfür kann die Fertigungsvorrichtung 1 eine Steuereinheit beziehungsweise eine Regeleinheit, insbesondere in Form einer CPU, aufweisen (nicht gezeigt). Diese kann insbesondere die vorstehend erläuterten Verfahrensschritte zur Fertigung eines Objekts mittels der Fertigungsvorrichtung 1 durchführen beziehungsweise steuern/regeln.

Neben der vorstehenden schriftlichen Beschreibung der Erfindung wird zu deren ergänzender Offenbarung hiermit explizit auf die zeichnerische Darstellung der Erfindung in den Fig. 1 bis 10 Bezug genommen.

### Bezugszeichenliste

- 1: Fertigungsvorrichtung
- 2: Transferplattform
- 2A: Transferplattformoberfläche
- 3: Druckeinheit
- 4: Bauplattform
- 4A: Bauplattformoberfläche
- 5: Folienelement
- 6: Halteplatte
- 7: Objekt
- 8: Schicht
- 9: Objektteile
- 10: Druckluft
- 11: Zerspanungseinheit
- 12: Schwingungs-Generator
- 13: Abstandshalter
- 14: Stößel
- 15: Transferplatte
- 16: Stellschraube
- 17: Aktives Stellglied
- 18: Elektromagnet
- 19: Wärmequelle
- 20: Wärme

- 100: Aufbringen
- 200: Übergeben
- 210: Annähern
- 220: Pressen
- 230: Ablösen

## Patentansprüche

1. Fertigungsvorrichtung (1) zum schichtweisen Fertigen von Objekten (7), aufweisend
• zumindest eine Transferplattform (2),
• zumindest eine Druckeinheit (3) zum Aufbringen zumindest einer Schicht (8) des Objekts (7), insbesondere linienweise, auf eine Transferplattformoberfläche (2A) der Transferplattform (2), wobei sich die Schicht (8) in eine erste Richtung (x) und in eine zweite Richtung (y) erstreckt, und
• eine Bauplattform (4), ausgebildet zum Übernehmen der Schicht (8) von der Transferplattform (2), so dass das Objekt (7) in eine dritte Richtung (z) schichtweise hergestellt wird, **dadurch gekennzeichnet, dass**
• die zumindest eine Druckeinheit (3) ein Extruder ist.

2. Fertigungsvorrichtung (1) nach Anspruch 1, **dadurch gekennzeichnet, dass** die Bauplattform (4) eine Bauplattformoberfläche (4A) aufweist und ausgebildet ist, die Schicht (8) von der Transferplattform (2) auf der Bauplattformoberfläche (4A) oder auf bereits auf der Bauplattformoberfläche (4A) vorhandenen Objektteilen (9) des Objekts (7) zu übernehmen.

3. Fertigungsvorrichtung (1) nach Anspruch 2, **dadurch gekennzeichnet, dass** die Transferplattformoberfläche (2A) parallel zu der Bauplattformoberfläche (4A) ausgebildet ist.

4. Fertigungsvorrichtung (1) nach einem der vorhergehenden Ansprüche, **dadurch gekennzeichnet, dass** die Bauplattform (4) ausgebildet ist, zum Übernehmen der Schicht (8) von der Transferplattform (2) eine Presskraft auf die Schicht (8) auszuüben.

5. Fertigungsvorrichtung (1) nach einem der vorhergehenden Ansprüche, **dadurch gekennzeichnet, dass** die Transferplattform (2) ein die Transferplattformoberfläche (2A) bildendes Folienelement (5) und eine das Folienelement (5) aufnehmende Halteplatte (6) aufweist, wobei das Folienelement (5) zum Lösen einer darauf aufgebrachten Schicht (8) zumindest bereichsweise von der Halteplatte (6) abhebbar ist.

6. Fertigungsvorrichtung (1) nach einem der vorhergehenden Ansprüche, **dadurch gekennzeichnet, dass** die Transferplattform (2) Oberflächenstrukturen zur Vergrößerung der Transferplattformoberfläche (2A) aufweist.

7. Fertigungsvorrichtung (1) nach einem der vorhergehenden Ansprüche, **dadurch gekennzeichnet, dass** die Transferplattform (2) und die Bauplattform (4) jeweils derart ausgebildet sind, dass eine Haftfähigkeit der Schicht (8) und/oder des Objekts (7) an der Bauplattform (4) höher ist als an der Transferplattform (2).

8. Fertigungsvorrichtung (1) nach einem der vorhergehenden Ansprüche, **gekennzeichnet durch** eine Vielzahl von Transferplattformen (2), wobei bevorzugt jeder Transferplattform (2) eine eigene Druckeinheit (3) zugeordnet ist.

9. Fertigungsvorrichtung (1) nach einem der vorhergehenden Ansprüche, **gekennzeichnet durch** eine Zerspanungseinheit (11) zum zerspanenden Bearbeiten von auf die Bauplattform (4) aufgebrachten Objektteilen (9).

10. Fertigungsvorrichtung (1) nach einem der vorhergehenden Ansprüche, **dadurch gekennzeichnet, dass** die Transferplattform (2) eine Transferplatte (15), welche als Transferplattformoberfläche (2A) dient, auf welche die Schicht (8) aufgebracht wird, und ein aktives Stellglied (17) aufweist, welches zum gezielten Wölben der Transferplattform (2) eingerichtet ist.

11. Verfahren zum schichtweisen Fertigen von Objekten (7), aufweisend die Schritte:
• Aufbringen (100) zumindest einer Schicht (8) des Objekts (7), insbesondere linienweise, auf eine Transferplattformoberfläche (2A) zumindest einer Transferplattform (2) mittels einer Druckeinheit (3), wobei sich die Schicht (8) in eine erste Richtung (x) und in eine zweite Richtung (y) erstreckt,
• Übergeben (200) der Schicht (8) von der Transferplattform (2) an eine Bauplattform (4) entlang einer dritten Richtung (z), und
• Wiederholen der Schritte des Aufbringens (100) und Übergebens (200), so dass das Objekt (7) in die dritte Richtung (z) schichtweise hergestellt wird, **dadurch gekennzeichnet,**
• **dass** die Schicht (8) durch einen Extrusionsprozess aufgebracht (100) wird.

12. Verfahren nach Anspruch 11, **dadurch gekennzeichnet, dass** das Übergeben (200) der Schicht (8) die folgenden Teilschritte aufweist:
• Annähern (210) der Transferplattform (2) und der Bauplattform (4),
• Pressen (220) der Schicht (8) auf der Transferplattformoberfläche (2A) gegen eine Bauplattformoberfläche (4A) der Bauplattform (4) oder gegen bereits auf der Bauplattformoberfläche (4A) vorhandene Objektteile (9) des Objekts (7), und
• Ablösen (230) der Schicht (8) von der Transferplattformoberfläche (2A), wobei vorzugsweise die Temperatur der Schicht (8) vor und/oder während des Pressens (220) zumindest der Plastifizierungstemperatur des Materials der Schicht (8) entspricht.

13. Verfahren nach Anspruch 12, **dadurch gekennzeichnet, dass** während und/oder nach dem Schritt des Ablösens (230) ein Kühlen der Transferplattformoberfläche (2A) und/oder der Bauplattformoberfläche (4A) erfolgt.

14. Verfahren nach einem der Ansprüche 11 bis 13, **dadurch gekennzeichnet, dass** im Schritt des Aufbringens (100) genau eine Schicht (8) auf der Transferplattformoberfläche (2A) gefertigt wird.

15. Verfahren nach einem der Ansprüche 11 bis 14, **dadurch gekennzeichnet, dass** zum Übergeben (200), insbesondere zum Annähern (210), der Transferplattform (2) und der Bauplattform (4) die Bauplattform (4) entlang der ersten Richtung (x) und der zweiten Richtung (y) und der dritten Richtung (z) bewegt wird, während die Transferplattform (2) an einer vordefinierten Position verbleibt.

## Claims

1. A manufacturing device (1) for manufacturing objects (7) layer by layer, comprising
- at least one transfer platform (2),
- at least one printing unit (3) for applying at least one layer (8) of the object (7), in particular line by line, to a transfer platform surface (2A) of the transfer platform (2), wherein the layer (8) extends in a first direction (x) and in a second direction (y), and
- a construction platform (4) formed to receive the layer (8) from the transfer platform (2), so that the object (7) is produced layer by layer in a third direction (z), **characterized in that**
- the at least one printing unit (3) is an extruder.

2. The manufacturing device (1) according to claim 1, **characterised in that** the construction platform (4) comprises a construction platform surface (4A) and is formed to receive the layer (8) from the transfer platform (2) at the construction platform surface (4A) or at object parts (9) of the object (7), which are already present at the construction platform surface (4A).

3. The manufacturing device (1) according to claim 2, **characterised in that** the transfer platform surface (2A) is formed parallel to the construction platform surface (4A).

4. The manufacturing device (1) according to one of the preceding claims, **characterised in that** the construction platform (4) is formed to apply a pressing force to the layer (8) for receiving the layer (8) from the transfer platform (2).

5. The manufacturing device (1) according to one of the preceding claims, **characterised in that** the transfer platform (2) comprises a foil element (5) forming the transfer platform surface (2A) and a holding plate (6) receiving the foil element (5), wherein the foil element (5) can be lifted off the holding plate (6) at least in regions for detaching a layer (8) arranged thereto.

6. The manufacturing device (1) according to one of the preceding claims, **characterised in that** the transfer platform (2) comprises surface structures for increasing the transfer platform surface (2A).

7. The manufacturing device (1) according to one of the preceding claims, **characterized in that** the transfer platform (2) and the construction platform (4) are each formed in such a way that an adhesiveness of the layer (8) and/or the object (7) to the construction platform (4) is higher than to the transfer platform (2).

8. The manufacturing device (1) according to one of the preceding claims, **characterised by** a plurality of transfer platforms (2), wherein each transfer platform (2) is preferably assigned to a respective printing unit (3).

9. The manufacturing device (1) according to one of the preceding claims, **characterised by** a cutting unit (11) for processing by cutting object parts (9) arranged at the construction platform (4).

10. The manufacturing device (1) according to one of the preceding claims, **characterized in that** the transfer platform (2) comprises a transfer plate (15), which serves as transfer platform surface (2A), to which the layer (8) is arranged, and an active actuator (17), which is arranged for selectively arching the transfer platform (2).

11. A method for the layer-by-layer production of objects (7), comprising the steps:
- applying (100) at least one layer (8) of the object (7), particularly line by line, to a transfer platform surface (2A) of at least one transfer platform (2) by means of a printing unit (3), wherein the layer (8) extends in a first direction (x) and in a second direction (y),
- transferring (200) the layer (8) from the transfer platform (2) to a construction platform (4) along a third direction (z), and
- repeating the steps of applying (100) and transferring (200), so that the object (7) is produced layer by layer in the third direction (z), **characterised in that**
- that the layer (8) is arranged (100) by an extrusion process.

12. The method according to claim 11, **characterized in that** the transfer (200) of the layer (8) comprises the following substeps:
- Approaching (210) the transfer platform (2) and the construction platform (4),
- pressing (220) the layer (8) to the transfer platform surface (2A) against a construction platform surface (4A) of the construction platform (4) or against object parts (9) of the object (7), which are already present at the construction platform surface (4A), and
- detaching (230) the layer (8) from the transfer platform surface (2A), wherein preferably the temperature of the layer (8) before and/or during the pressing (220) corresponds at least to the plasticising temperature of the material of the layer (8).

13. The method according to claim 12, **characterised in that** cooling of the transfer platform surface (2A) and/or the construction platform surface (4A) takes place during and/or after the step of stripping (230).

14. The method according to any one of claims 11 to 13, **characterized in that** in the step of applying (100) exactly one layer (8) is made at the transfer platform surface (2A).

15. The method according to any one of claims 11 to 14, **characterized in that** for transferring (200), particularly for approaching (210), of the transfer platform (2) and the construction platform (4), the construction platform (4) is moved along the first direction (x) and the second direction (y) and the third direction (z), while the transfer platform (2) remains at a predefined position.

## Revendications

1. Dispositif de fabrication (1) pour la fabrication couche par couche d'objets (7), présentant
- au moins une plateforme de transfert (2),
- au moins une unité d'impression (3) pour appliquer au moins une couche (8) de l'objet (7), en particulier ligne par ligne, sur une surface de plateforme de transfert (2A) de la plateforme de transfert (2), dans lequel la couche (8) s'étend dans une première direction (x) et dans une deuxième direction (y), et
- une plateforme de construction (4), réalisée pour réceptionner la couche (8) de la plateforme de transfert (2) de sorte que l'objet (7) est fabriqué couche par couche dans une troisième direction (z), **caractérisé en ce que**
- l'au moins une unité d'impression (3) est une extrudeuse.

2. Dispositif de fabrication (1) selon la revendication 1, **caractérisé en ce que** la plateforme de construction (4) présente une surface de plateforme de construction (4A) et est réalisée pour réceptionner la couche (8) de la plateforme de transfert (2) sur la surface de plateforme de construction (4A) ou sur des parties d'objet (9) de l'objet (7) déjà présentes sur la surface de plateforme de construction (4A).

3. Dispositif de fabrication (1) selon la revendication 2, **caractérisé en ce que** la surface de plateforme de transfert (2A) est réalisée de manière parallèle à la surface de plateforme de construction (4A).

4. Dispositif de fabrication (1) selon l'une quelconque des revendications précédentes, **caractérisé en ce que** la plateforme de construction (4) est réalisée pour exercer une force de compression sur la couche (8) pour réceptionner la couche (8) de la plateforme de transfert (2).

5. Dispositif de fabrication (1) selon l'une quelconque des revendications précédentes, **caractérisé en ce que** la plateforme de transfert (2) présente un élément de film (5) formant la surface de plateforme de transfert (2A) et un panneau de maintien (6) recevant l'élément de film (5), dans lequel l'élément de film (5) peut être soulevé de la plaque de maintien (6) au moins par endroits pour détacher une couche (8) appliquée dessus.

6. Dispositif de fabrication (1) selon l'une quelconque des revendications précédentes, **caractérisé en ce que** la plateforme de transfert (2) présente des structures de surface pour agrandir la surface de plateforme de transfert (2A).

7. Dispositif de fabrication (1) selon l'une quelconque des revendications précédentes, **caractérisé en ce que** la plateforme de transfert (2) et la plateforme de construction (4) sont réalisées de telle manière respectivement qu'un pouvoir d'adhérence de la couche (8) et/ou de l'objet (7) est plus élevé sur la plateforme de construction (4) que sur la plateforme de transfert (2).

8. Dispositif de fabrication (1) selon l'une quelconque des revendications précédentes, **caractérisé par** une pluralité de plateformes de transfert (2), dans lequel une unité d'impression (3) propre est associée de manière préférée à chaque plateforme de transfert (2).

9. Dispositif de fabrication (1) selon l'une quelconque des revendications précédentes, **caractérisé par** une unité d'enlèvement des copeaux (11) pour usiner par enlèvement des copeaux des parties d'objet (9) appliquées sur la plateforme de construction (4).

10. Dispositif de fabrication (1) selon l'une quelconque des revendications précédentes, **caractérisé en ce que** la plateforme de transfert (2) présente un panneau de transfert (15), lequel fait office de surface de plateforme de transfert (2A), sur laquelle la couche (8) est appliquée, et un organe de réglage actif (17), lequel est mis au point pour bomber de manière ciblée la plateforme de transfert (2).

11. Procédé de fabrication couche par couche d'objets (7), présentant les étapes :
- d'application (100) d'au moins une couche (8) de l'objet (7), en particulier ligne par ligne, sur une surface de plateforme de transfert (2A) d'au moins une plateforme de transfert (2) au moyen d'une unité d'impression (3), dans lequel la couche (8) s'étend dans une première direction (x) et dans une deuxième direction (y),
- de transfert (200) de la couche (8) depuis la plateforme de transfert (2) sur une plateforme de construction (4) le long d'une troisième direction (z), et
- de répétition des étapes de l'application (100) et du transfert (200) si bien que l'objet (7) est fabriqué couche par couche dans la troisième direction (z), **caractérisé en ce**
- **que** la couche (8) est appliquée (100) par un processus d'extrusion.

12. Procédé selon la revendication 11, **caractérisé en ce que** le transfert (200) de la couche (8) présente les sous-étapes qui suivent :
- de rapprochement (210) de la plateforme de transfert (2) et de la plateforme de construction (4),
- de compression (220) de la couche (8) sur la surface de plateforme de transfert (2A) contre une surface de plateforme de construction (4A) de la plateforme de construction (4) ou contre des parties d'objet (9) de l'objet (7) déjà présentes sur la surface de plateforme de construction (4A), et
- de décollement (230) de la couche (8) de la surface de plateforme de transfert (2A), dans lequel de préférence la température de la couche (8) correspond, avant et/ou pendant la compression (220), au moins à la température de plastification du matériau de la couche (8).

13. Procédé selon la revendication 12, **caractérisé en ce que** pendant et/ou après l'étape du décollement (230), un refroidissement de la surface de plateforme de transfert (2A) et/ou de la surface de plateforme de construction (4A) a lieu.

14. Procédé selon l'une quelconque des revendications 11 à 13, **caractérisé en ce que** lors de l'étape de l'application (100), précisément une couche (8) est fabriquée sur la surface de plateforme de transfert (2A).

15. Procédé selon l'une quelconque des revendications 11 à 14, **caractérisé en ce que** pour transférer (200), en particulier pour rapprocher (210), la plateforme de transfert (2) et la plateforme de construction (4), la plateforme de construction (4) est déplacée le long de la première direction (x) et de la deuxième direction (y) et de la troisième direction (z), tandis que la plateforme de transfert (2) reste sur une position prédéfinie.
